# EUROPEAN PATENT APPLICATION

(11) **EP 3 806 021 A1**
(43) Date of publication of application: **14.04.2021**
(21) Application number: 19840851.0
(22) Date of filing: 23.07.2019
(51) Int. Cl.: G06Q 30/06, G06Q 30/02

(54) **COMMODITY RECOMMENDATION METHOD, APPARATUS AND SYSTEM, AND COMPUTER READABLE STORAGE MEDIUM**

(30) Priority: 25.07.2018 CN 201810822977
(71) Applicant: Beijing Jingdong Shangke Information Technology Co., Ltd., Beijing 100086 (CN); Beijing Jingdong Century Trading Co., Ltd., Beijing 100176 (CN)
(72) Inventor: SHI, Hailin, Beijing 100086 (CN); MEI, Tao, Beijing 100086 (CN); ZHOU, Bowen, Beijing 100086 (CN); ZHAO, He, Beijing 100086 (CN); GONG, Shu, Beijing 100086 (CN)
(74) Representative: Ruuskanen, Juha-Pekka
(86) International application number: PCT/CN2019/097244
(87) International publication number: WO 2020/020137

(57) **Abstract**

A commodity recommendation method, apparatus and system, and a computer readable storage medium, relating to the technical field of computers. The method comprises: analyzing an image of a specific off-line customer who is currently in a shop, so as to obtain an attribute of the specific off-line customer (102); according to the attribute of the specific off-line customer, determining an on-line user matching the specific off-line customer (104); according to a commodity corresponding to a position where an off-line customer, who has entered the shop before, lingers, constructing a hot commodity set for the shop (106); and according to historical shopping information of the on-line user and the hot commodity set, recommending a commodity to the specific off-line customer (108).

## Description

### CROSS-REFERENCE TO RELATED APPLICATIONS

The present application is based on and claims priority to China Patent Application No. 201810822977.X filed on July 25, 2018, the disclosure of which is incorporated by reference herein in its entirety.

### TECHNICAL FIELD

The present disclosure relates to the field of computer technology, and in particularly to a commodity recommendation method, apparatus, system and a computer-readable storage medium.

### BACKGROUND

With the continuous development of internet technology, online consumption is becoming more and more popular. However, online consumption cannot completely replace offline consumption, especially for some luxury commodities, people tend to consume in offline stores.

At present, in the traditional commodity recommendation method, commodities in the stores are mainly recommended to customers by a shopping guide, or by broadcasting advertisement in loop using a billboard.

### SUMMARY

The inventors have found that in the traditional commodity recommendation method, commodities recommended to customers are artificially determined, and are not accurate.

One technical problem to be solved by the embodiments of the present disclosure is to improve the accuracy of recommending a commodity to a specific offline customer.

According to one aspect of the embodiments of the present disclosure, provided is a commodity recommendation method comprising: analyzing an image of a specific offline customer currently entering a store to obtain an attribute of the specific offline customer; determining an online user matching the specific offline customer according to the attribute of the specific offline customer; constructing a collection of popular commodities of the store according to commodities corresponding to stay positions of offline customers who have entered the store before; and recommending a commodity to the specific offline customer according to a historical shopping information of the online user and the collection of popular commodities.

In some embodiments, the recommending a commodity to the specific offline customer according to a historical shopping information of the online user and the collection of popular commodities comprises: determining a plurality of commodities to be recommended according to the historical shopping information of the online user; determining a recommendation degree of each of the plurality of commodities to be recommended, according to a commodity attention degree and a recommendation weight of the each of the plurality of commodities to be recommended, wherein the recommendation weight of a commodity to be recommended of the plurality of commodities to be recommended which belongs to the collection of popular commodities is greater than the recommendation weight of a commodity to be recommended of the plurality of commodities to be recommended which not belongs to the collection of popular commodities; and recommending the plurality of commodities to be recommended to the specific offline customer according to a descending sequence of the recommendation degree.

In some embodiments, the constructing a collection of popular commodities comprises: generating a heat map of the offline customers according to the stay positions of the offline customers; and obtaining the collection of popular commodities according to the heat map of the offline customers and placement positions corresponding to the commodities.

In some embodiments, the commodity recommendation method further comprises: obtaining at least one of a historical shopping information of the specific offline customer in the store or a preferred commodity of the specific offline customer, wherein the recommending a commodity to the specific offline customer according to historical shopping information of the online user and the collection of popular commodities comprises: recommending the commodity to the specific offline customer according to the historical shopping information of the online user, the collection of popular commodities, and at least one of the historical shopping information of the specific offline customer in the store or the preferred commodity of the specific offline customer.

In some embodiments, the recommending the commodity to the specific offline customer according to the historical shopping information of the online user, the collection of popular commodities, and at least one of the historical shopping information of the specific offline customer in the store or the preferred commodity of the specific offline customer comprises: determining a plurality of first commodities to be recommended according to the historical shopping information of the online user; determining a plurality of second commodities to be recommended according to at least one of the historical shopping information of the specific offline customer in the store or the preferred commodity of the specific offline customer; constructing a collection of commodities to be recommended according to the plurality of first commodities to be recommended and the plurality of second commodities to be recommended, wherein the collection of commodities to be recommended comprises a plurality of commodities to be recommended comprising at least one of the plurality of first commodities to be recommended and at least one of the plurality of second commodities to be recommended; determining a recommendation degree of each of the plurality of commodities to be recommended, according to a commodity attention degree and a recommendation weight of the each of the plurality of commodities to be recommended, wherein the recommendation weight of a commodity to be recommended of the plurality of commodities to be recommended which belongs to the collection of popular commodities is greater than the recommendation weight of a commodity to be recommended of the plurality of commodities to be recommended which not belongs to the collection of popular commodities; and recommending the plurality of commodities to be recommended to the specific offline customer according to a descending sequence of the recommendation degree.

In some embodiments, the preferred commodity of the specific offline customer is determined by: generating a heat map of the specific offline customer according to stay positions of the specific offline customer in the store before; calculating a stay time of the specific offline customer at each of placement positions corresponding to different commodities according to the heat map of the specific offline customer and the placement positions corresponding to different commodities; and determining a commodity corresponding to a placement position with the stay time longer than a preset time as the preferred commodity of the specific offline customer.

In some embodiments, the recommending the plurality of commodities to be recommended to the specific offline customer comprises: generating a name of the specific offline customer and names of the plurality of commodities to be recommended into a sentence conforming to grammatical rules by natural language generation technology; and converting the sentence into a speech and sending the speech to a shopping guide of the store, so that the shopping guide recommends the plurality of commodities to be recommended to the specific offline customer according to the speech.

In some embodiments, the recommending the plurality of commodities to be recommended to the specific offline customer comprises: obtaining an image corresponding to each of the plurality of commodities to be recommended; generating a description information of each of the plurality of commodities to be recommended according to the image corresponding to the each of the plurality of commodities to be recommended; and outputting the image and the description information of each of the plurality of commodities to be recommended to a display screen of the store for display according to a descending sequence of the recommendation degree.

In some embodiments, the commodity attention degree of each of the plurality of commodities to be recommended is determined according to at least one of a visiting number, a feedback information of online users, a matching degree with habits of the specific offline customer or a cost performance of the each of the plurality of commodities to be recommended, wherein the higher the visiting number, the better the feedback information of online users, the higher the matching degree with habits of the specific offline customer, or the higher the cost performance, the higher the commodity attention degree of the each of the plurality of commodities to be recommended is.

According to another aspect of embodiments of the present disclosure, provided is a commodity recommendation apparatus comprising: an analysis module configured to analyze an image of a specific offline customer currently entering a store to obtain an attribute of the specific offline customer; a match module configured to determine an online user matching the specific offline customer according to the attribute of the specific offline customer; a construction module configured to construct a collection of popular commodities of the store according to commodities corresponding to stay positions of offline customers who have entered the store before; and a recommendation module configured to recommend a commodity to the specific offline customer according to a historical shopping information of the online user and the collection of popular commodities.

In some embodiments, the recommendation module is configured to: determine a plurality of commodities to be recommended according to the historical shopping information of the online user; determine a recommendation degree of each of the plurality of commodities to be recommended, according to a commodity attention degree and a recommendation weight of the each of the plurality of commodities to be recommended, wherein the recommendation weight of a commodity to be recommended of the plurality of commodities to be recommended which belongs to the collection of popular commodities is greater than the recommendation weight of a commodity to be recommended of the plurality of commodities to be recommended which not belongs to the collection of popular commodities; and recommend the plurality of commodities to be recommended to the specific offline customer according to a descending sequence of the recommendation degree.

In some embodiments, the construction module is configured to: generate a heat map of the offline customers according to the stay positions of the offline customers; and obtain the collection of popular commodities according to the heat map of the offline customers and placement positions corresponding to the commodities.

In some embodiments, the commodity recommendation apparatus further comprises: an obtaining module configured to obtain at least one of a historical shopping information of the specific offline customer in the store or a preferred commodity of the specific offline customer, wherein the recommendation module is configured to recommend the commodity to the specific offline customer according to the historical shopping information of the online user, the collection of popular commodities, and at least one of the historical shopping information of the specific offline customer in the store or the preferred commodity of the specific offline customer.

In some embodiments, the recommendation module is configured to: determine a plurality of first commodities to be recommended according to the historical shopping information of the online user; determine a plurality of second commodities to be recommended according to at least one of the historical shopping information of the specific offline customer in the store or the preferred commodity of the specific offline customer; construct a collection of commodities to be recommended according to the plurality of first commodities to be recommended and the plurality of second commodities to be recommended, wherein the collection of commodities to be recommended comprises a plurality of commodities to be recommended comprising at least one of the plurality of first commodities to be recommended and at least one of the plurality of second commodities to be recommended; determine a recommendation degree of each of the plurality of commodities to be recommended, according to a commodity attention degree and a recommendation weight of the each of the plurality of commodities to be recommended, wherein the recommendation weight of a commodity to be recommended of the plurality of commodities to be recommended which belongs to the collection of popular commodities is greater than the recommendation weight of a commodity to be recommended of the plurality of commodities to be recommended which not belongs to the collection of popular commodities; and recommend the plurality of commodities to be recommended to the specific offline customer according to a descending sequence of the recommendation degree.

In some embodiments, the preferred commodity of the specific offline customer is determined by: generating a heat map of the specific offline customer according to stay positions of the specific offline customer in the store before; calculating a stay time of the specific offline customer at each of placement positions corresponding to different commodities according to the heat map of the specific offline customer and the placement positions corresponding to different commodities; and determining a commodity corresponding to a placement position with the stay time longer than a preset time as the preferred commodity of the specific offline customer.

In some embodiments, the recommendation module is configured to: generate a name of the specific offline customer and names of the plurality of commodities to be recommended into a sentence conforming to grammatical rules by natural language generation technology; and convert the sentence into a speech and sending the speech to a shopping guide of the store, so that the shopping guide recommends the plurality of commodities to be recommended to the specific offline customer according to the speech.

In some embodiments, the recommendation module is configured to: obtain an image corresponding to each of the plurality of commodities to be recommended; generate a description information of each of the plurality of commodities to be recommended according to the image corresponding to the each of the plurality of commodities to be recommended; and outputting the image and the description information of each of the plurality of commodities to be recommended to a display screen of the store for display according to a descending sequence of the recommendation degree.

In some embodiments, the commodity attention degree of each of the plurality of commodities to be recommended is determined according to at least one of a visiting number, a feedback information of online users, a matching degree with habits of the specific offline customer or a cost performance of the each of the plurality of commodities to be recommended, wherein the higher the visiting number, the better the feedback information of online users, the higher the matching degree with habits of the specific offline customer, or the higher the cost performance, the higher the commodity attention degree of the each of the plurality of commodities to be recommended is.

According to a further aspect of the embodiments of the present disclosure, a commodity recommendation apparatus is provided. The apparatus comprises: a memory; and a processor coupled to the memory and configured to execute the commodity recommendation method according to any one of the above embodiments based on instructions stored in the memory.

According to still another aspect of the embodiments of the present disclosure, a computer-readable storage medium having computer program instructions stored thereon, wherein the commodity recommendation method according to any one of the above embodiments is implemented when the instructions are executed by a processor.

According to still further aspect of the embodiments of the present disclosure, provided is a commodity recommendation system, comprising: the commodity recommendation apparatus according to any one of the above embodiments; and a camera configured to collect images of offline customers currently entering the store and input the collected images to the commodity recommendation apparatus.

In the embodiments of the present disclosure, when commodities are recommended to the specific offline customer, the historical shopping information of an online user matching specific offline customer and the collection of popular commodities are comprehensively considered. Such a recommendation method which is directed to the specific offline customer, may improve the accuracy of recommending commodities to the specific offline customer. In addition, the specific offline customer may be informed about current trends, thereby providing a more comfortable shopping experience for the specific offline customer.

Next, the technical solutions of the present disclosure are further described in detail by means of the accompanying drawings and embodiments.

### BRIEF DESCRIPTION OF THE DRAWINGS

The accompanying drawings, which constitute part of this specification, illustrate exemplary embodiments of the present disclosure and, together with this specification, serve to explain the principles of the present disclosure.

The present disclosure may be more clearly understood from the following detailed description with reference to the accompanying drawings, in which:
Fig. 1 is a schematic flowchart showing a commodity recommendation method according to some embodiments of the present disclosure;
Fig. 2 is a schematic flowchart showing a commodity recommendation method according to other embodiments of the present disclosure;
Fig. 3 is a schematic view showing a flow of recommending commodities to the specific offline customer according to some implementations of the present disclosure;
Fig. 4 is a schematic structure view of a commodity recommendation apparatus according to some embodiments of the present disclosure;
Fig. 5 is a schematic structure view of a commodity recommendation apparatus according to other embodiments of the present disclosure;
Fig. 6 is a schematic structure view of a commodity recommendation apparatus according to still other embodiments of the present disclosure;
Fig. 7 is a schematic structural view showing a commodity recommendation system according to some embodiments of the present disclosure.

It should be understood that the dimensions of the various parts shown in the accompanying drawings are not necessarily drawn according to the actual scale. In addition, the same or similar reference signs are used to denote the same or similar components.

### DETAILED DESCRIPTION

Various exemplary embodiments of the present disclosure will now be described in detail with reference to the accompanying drawings. The following description of the exemplary embodiments is merely illustrative and is in no way intended as a limitation to the present disclosure, its application or use. The present disclosure may be implemented in many different forms, which are not limited to the embodiments described herein. These embodiments are provided to make the present disclosure thorough and complete, and fully convey the scope of the present disclosure to those skilled in the art. It should be noticed that: relative arrangement of components and steps, material composition, numerical expressions, and numerical values set forth in these embodiments, unless specifically stated otherwise, should be explained as merely illustrative, and not as a limitation.

The use of the terms "first", "second" and similar words in the present disclosure do not denote any order, quantity or importance, but are merely used to distinguish between different parts. A word such as "comprise", "have" or variants thereof means that the element before the word covers the element(s) listed after the word without excluding the possibility of also covering other elements. The terms "up", "down", or the like are used only to represent a relative positional relationship, and the relative positional relationship may be changed correspondingly if the absolute position of the described object changes.

In the present disclosure, when it is described that a specific component is disposed between a first component and a second component, there may be an intervening component between the specific component and the first component or between the specific component and the second component. When it is described that a specific part is connected to other parts, the specific part may be directly connected to the other parts without an intervening part, or not directly connected to the other parts with an intervening part.

Unless otherwise defined, all terms (including technical and scientific terms) used herein have the same meanings as the meanings commonly understood by one of ordinary skill in the art to which the present disclosure belongs. It should also be understood that terms as defined in general dictionaries, unless explicitly defined herein, should be interpreted as having meanings that are consistent with their meanings in the context of the relevant art, and not to be interpreted in an idealized or extremely formalized sense.

Techniques, methods, and apparatus known to those of ordinary skill in the relevant art may not be discussed in detail, but where appropriate, these techniques, methods, and apparatuses should be considered as part of this specification.

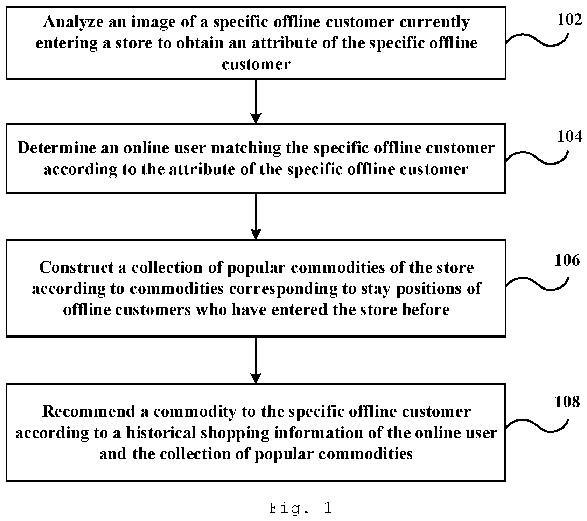

Fig. 1 is a schematic flowchart showing a commodity recommendation method according to some embodiments of the present disclosure.

At step 102, an image of a specific offline customer currently entering a set area (such as a store) is analyzed to obtain an attribute of the specific offline customer.

For example, a camera may be installed in the store to capture images of offline customers entering the store. A specific offline customer, such as a VIP customer, can be recognized by processing the images of offline customers using the face detection and recognition technology.

Furthermore, the attribute of the specific offline customer can be obtained by analyzing the image of the specific offline customer using the facial attribute analysis technology. For example, the information of the detected facial area may be input into a deep learning model to obtain the attribute of the specific offline customer.

The attribute of the specific offline customer may comprise, but is not limited to, at least one of the following: gender, age, expression, race, facial attractiveness, whether to wear glasses, whether to wear sunglasses, whether to have a beard, etc. For example, the attributes of the specific offline customer may be represented as an attribute vector, in which each element represents a certain attribute. For example, the vector (1, 2, 0, 1, 1, 1) represents a specific offline customer aged 20-30, white, female, without a mask, with glasses, and without sunglasses.

At step 104, an online user matching the specific offline customer is determined according to the attribute of the specific offline customer.

It should be understood that the online user may be any user who consumes via an internet platform. For example, the attribute of the online user may be obtained from an online database, and then matched with the attribute of the specific offline customer (for example, the attribute vectors are compared), so as to determine online users with the attribute the same as or similar to that of the specific offline customer. An online user with the attribute the same as or similar to that of the specific offline customer may be regarded as an online user matching the specific offline customer.

The attribute of an online user may be determined using a method similar to the method for determining the attribute of the specific offline customer described above.

In order to improve the accuracy of recommending commodities to the specific offline customer, some online users may be selected for subsequent commodity recommendation according to the home location of the specific offline customer, which may reduce the amount of data processing and improve the efficiency of commodity recommendation. In addition, it is also more accurate to recommend commodities to the specific offline customer according to data of online users with the same home location as specific offline customer. For example, when commodities are recommended to the specific offline customer in a store in Beijing, online users whose home location is Beijing may be selected for subsequent commodity recommendation. In some embodiments, the home location of an online user may be determined according to a registered address on the internet platform, a common delivery address, or a network IP address of the online user.

At step 106, a collection of popular commodities of the store is constructed according to objects (such as commodities) corresponding to stay positions of offline customers who have entered the store before.

For example, a heat map of offline customers may be generated according to the stay positions of offline customers who have entered the store before. Then, a collection of popular commodities is obtained according to the heat map of offline customers and placement positions corresponding to the commodities.

The heat map of offline customers can reflect a distribution condition of stay positions of offline customers in the store during a period of time in the past. According to the distribution condition of stay positions of offline customers in the store, it is possible to obtain commodities in which offline customers are more interested, and then further obtain the collection of popular commodities.

At step 108, a commodity is recommended to the specific offline customer according to historical shopping information of the online user and the collection of popular commodities.

An implementation of recommending commodities to the specific offline customer will be introduced below.

First, a plurality of commodities to be recommended is determined according to the historical shopping information of the online user matching the specific offline customer.

The historical shopping information may comprise commodities purchased by the online user and commodities collected by the online user, or the like.

Then, the recommendation degree of each commodity to be recommended is determined according to the commodity attention degree and recommendation weight of each commodity to be recommended. Here, the recommendation weight of a commodity to be recommended belonging to the collection of popular commodities is greater than the recommendation weight of a commodity to be recommended not belonging to the collection of popular commodities.

In some embodiments, the recommendation degree of each commodity to be recommended is obtained by calculating the product of the commodity attention degree and the recommendation weight of each commodity to be recommended. In other embodiments, after the product of the commodity attention degree and the recommendation weight of each commodity to be recommended is calculated, the sum S of the products of the commodity attention degree and recommendation weight of the plurality of commodities to be recommended may be calculated, and then the ratio of each product s to the S is calculated as the recommendation degree of each commodity to be recommended.

For example, the commodity attention degree of each commodity to be recommended may be determined according to at least one of the following: a visiting number, a feedback information of online users, a matching degree with habits of the specific offline customer or a cost performance of the each of the plurality of commodities to be recommended. The higher the visiting number, the better the feedback information from online users, the higher the matching degree with habits of the specific offline customer, or the higher the cost performance, the higher the commodity attention degree of the each of the plurality of commodities to be recommended is.

For example, the initial value of the recommendation weight of each commodity to be recommended may be the same. If a commodity to be recommended belongs to the set of popular commodities, the recommendation weight of this commodity to be recommended is increased.

After that, the plurality of commodities to be recommended is recommended to the specific offline customer according to a descending sequence of the recommendation degree, that is, a commodity to be recommended with greater recommendation degree is recommended in priority. In some embodiments, only commodities to be recommended of the plurality of commodities to be recommended with the recommendation degree greater than a preset recommendation degree are recommended.

In some embodiments, the plurality of commodities to be recommended may be recommended to the specific offline customer in the following manner. First, the name of the specific offline customer and the names of the plurality of commodities to be recommended are generated into a sentence conforming to grammatical rules through natural language generation technology. Then, the sentence is converted into a speech and the speech is sent to a shopping guide of the store, so that the shopping guide recommends the plurality of commodities to be recommended to the specific offline customer according to the speech. Thus, customized service is provided for the specific offline customer. For example, when Zhang San enters the store, a gray pullover, a white hat, and a blue jeans are recommended to him in turn.

In other embodiments, the plurality of commodities to be recommended may be recommended to offline customers in the following manner. First, an image corresponding to each commodity to be recommended is obtained. Then, a description information of each commodity to be recommended is generated according to the image corresponding to each commodity to be recommended. For example, the image corresponding to a commodity to be recommended may be input into an image caption model, which will output information describing the input image, so that the description information of each commodity to be recommended is obtained. After that, according to a descending sequence of recommendation degree, the image and the description information of each commodity to be recommended are output to the display screen of the store for display, so as to attract the attention degree of the specific offline customer. For example, a commodity to be recommended with a higher recommendation degree is displayed on the display screen in priority. For example, a gray pullover, a white hat, a blue jeans and the like and corresponding literal description thereof are displayed on the display screen in turn.

In the above embodiments, when commodities are recommended to the specific offline customer, the historical shopping information of an online user matching specific offline customer and the collection of popular commodities are comprehensively considered. Such a recommendation method which is directed to the specific offline customer, may improve the accuracy of recommending commodities to the specific offline customer. In addition, the specific offline customer may be informed about current trends, thereby providing a more comfortable shopping experience for the specific offline customer.

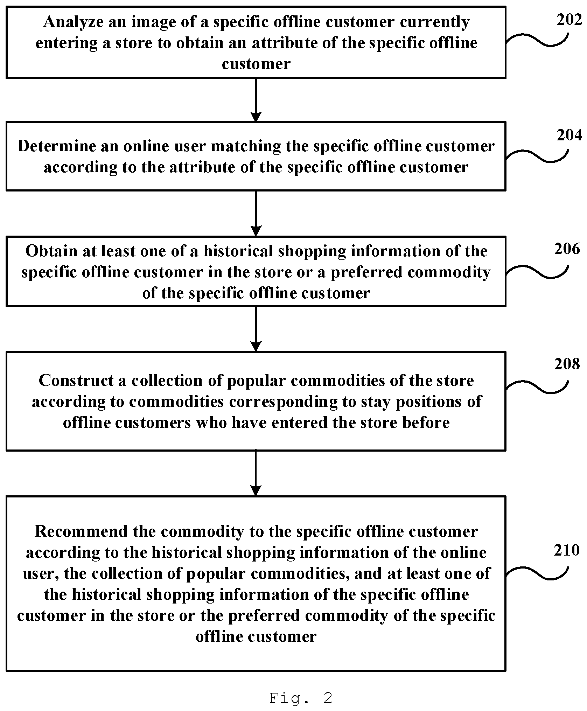

Fig. 2 is a schematic flowchart showing a commodity recommendation method according to other embodiments of the present disclosure. The differences between Fig. 2 and Fig. 1 will be focused in the following introduction, and other related aspects for which reference may be made to the above description, will not be described in detail here.

At step 202, an image of a specific offline customer currently entering the store is analyzed to obtain an attribute of the specific offline customer.

At step 204, an online user matching the specific offline customer is determined according to the attribute of the specific offline customer.

At step 206, at least one of a historical shopping information of the specific offline customer in the store or a preferred commodity of the specific offline customer is obtained.

For example, the preferred commodity of the specific offline customer may be determined in the following manner.

First, a heat map of the specific offline customer is generated according to stay positions of the specific offline customer in the store before. The heat map of the specific offline customer can reflect a distribution of stay positions of the specific offline customer in the store before. According to the distribution condition of stay positions of the specific offline customer in the store, commodities in which the specific offline customer is more interested in the store are obtained.

Then, a stay time of the specific offline customer at placement positions of different commodities is calculated according to the heat map of the specific offline customer and the placement positions corresponding to different commodities.

After that, a commodity corresponding to a placement position with the stay time longer than a preset time as the preferred commodity of the specific offline customer.

At step 208, a collection of popular commodities of the store is constructed according to commodities corresponding to stay positions of offline customers who have entered the store before.

At step 210, a commodity is recommended to the specific offline customer according to the historical shopping information of the online user, the collection of popular commodities, and at least one of the historical shopping information of the specific offline customer in the store or the preferred commodity of the specific offline customer.

Here, it should be noted that the preferred commodity of the specific offline customer may be a historical purchased commodity of the specific offline customer in the store, that is, the commodity that has been purchased.

In the above embodiments, when commodities are recommended to the specific offline customer, at least one of the historical shopping information of the specific offline customer in the store or the preferred commodities of the specific offline customer or is also considered. Such a recommendation method may recommend commodities in which the specific offline customer is more interested, thereby further improving the accuracy of the recommendation.

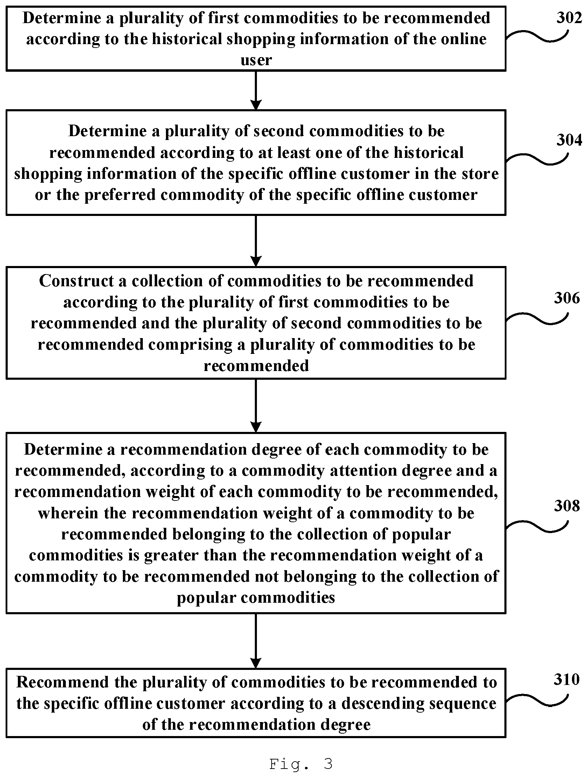

Fig. 3 is a schematic view showing a flow of recommending commodities to the specific offline customer according to some implementations of the present disclosure.

At step 302, a plurality of first commodities to be recommended is determined according to the historical shopping information of the online user matching specific offline customer.

For example, a commodity that has been purchased or collected by the online user may be determined as a first commodity to be recommended.

At step 304, a plurality of second commodities to be recommended is determined according to at least one of the historical shopping information of the specific offline customer in the store or the preferred commodity of the specific offline customer.

For example, the preferred commodities of the specific offline customer or the commodities similar to the preferred commodities may be as the second commodities to be recommended. Alternatively, the historical purchased commodities of the specific offline customer in the store or the commodities similar to the historical purchased commodities may be as the second commodities to be recommended. Alternatively, the preferred commodities of the specific offline customer, the commodities similar to the preferred commodities, the historical purchased commodities of the specific offline customer in the store, and the commodities similar to the historical purchased commodities may all be as the second commodities to be recommended.

At step 306, a collection of commodities to be recommended is constructed according to the plurality of first commodities to be recommended and the plurality of second commodities to be recommended. The collection of commodities to be recommended comprises a plurality of commodities to be recommended.

Here, the plurality of commodities to be recommended in the collection of commodities to be recommended constructed may comprise some or all of the first commodities to be recommended determined at step 302 and some or all of the second commodities to be recommended determined at step 304. In addition, a first commodity to be recommended and a second commodity to be recommended that are the same as each other may be combined into one commodity to be recommended.

At step 308, the recommendation degree of each commodity to be recommended is determined according to the commodity attention degree and recommendation weight of each commodity to be recommended. Here, the recommendation weight of a commodity to be recommended belonging to the collection of popular commodities is greater than the recommendation weight of a commodity to be recommended not belonging to the collection of popular commodities.

At step 310, the plurality of commodities to be recommended is recommended to the specific offline customer according to a descending sequence of the recommendation degree.

Here, the plurality of commodities to be recommended may be recommended to the specific offline customer according to the method provided above.

The embodiments in this specification are described in a progressive manner, and the differences of each embodiment from other embodiments are focused in its description. As for the embodiments of the apparatus, since they basically correspond to the embodiments of the method, the description is relatively simple, and for related aspects, reference may be made to the portion of the description for the embodiments of the method.

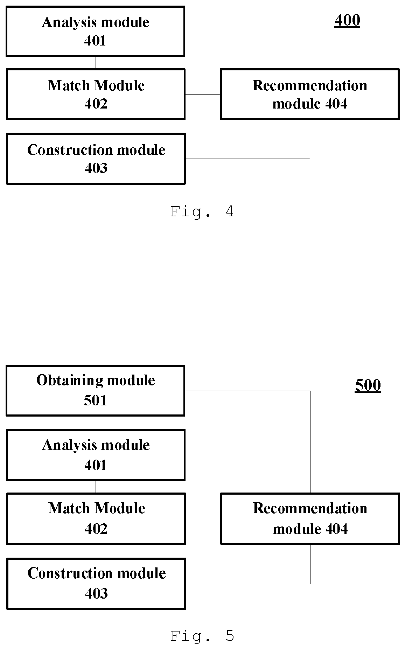

Fig. 4 is a schematic structure view of a commodity recommendation apparatus according to some embodiments of the present disclosure. As shown in Fig. 4, the commodity recommendation apparatus 400 in these embodiments comprises an analysis module 401, a match module 402, a construction module 403, and a recommendation module 404.

The analysis module 401 is configured to analyze an image of a specific offline customer currently entering a store to obtain an attribute of the specific offline customer.

The match module 402 is configured to determine an online user matching the specific offline customer according to the attribute of the specific offline customer.

The construction module 403 is configured to construct a collection of popular commodities of the store according to commodities corresponding to stay positions of offline customers who have entered the store before. In some embodiments, the construction module 403 is configured to generate a heat map of the offline customers according to the stay positions of the offline customers; and obtain the collection of popular commodities according to the heat map of the offline customers and placement positions corresponding to the commodities.

The recommendation module 404 is configured to recommend a commodity to the specific offline customer according to a historical shopping information of the online user and the collection of popular commodities.

In the above embodiments, when commodities are recommended to the specific offline customer, the historical shopping information of an online user matching specific offline customer and the collection of popular commodities are comprehensively considered. Such a recommendation method which is directed to the specific offline customer, may improve the accuracy of recommending commodities to the specific offline customer. In addition, the specific offline customer may be informed about current trends, thereby providing a more comfortable shopping experience for the specific offline customer.

In some embodiments, the recommendation module 404 is configured to recommend commodities to the specific offline customer in the following method: determine a plurality of commodities to be recommended according to the historical shopping information of the online user; determine a recommendation degree of each of the plurality of commodities to be recommended, according to a commodity attention degree and a recommendation weight of the each of the plurality of commodities to be recommended, wherein the recommendation weight of a commodity to be recommended of the plurality of commodities to be recommended which belongs to the collection of popular commodities is greater than the recommendation weight of a commodity to be recommended of the plurality of commodities to be recommended which not belongs to the collection of popular commodities; and recommend the plurality of commodities to be recommended to the specific offline customer according to a descending sequence of the recommendation degree. As some examples, the commodity attention degree of each of the plurality of commodities to be recommended is determined according to at least one of a visiting number, a feedback information of online users, a matching degree with habits of the specific offline customer or a cost performance of the each of the plurality of commodities to be recommended. Here, the higher the visiting number, the better the feedback information of online users, the higher the matching degree with habits of the specific offline customer, or the higher the cost performance, the higher the commodity attention degree of the each of the plurality of commodities to be recommended is.

Fig. 5 is a schematic structure view of a commodity recommendation apparatus according to other embodiments of the present disclosure. As shown in Fig. 5, the commodity recommendation apparatus 500 in these embodiments further comprises an obtaining module 501, as compared with the commodity recommendation apparatus 400 shown in Fig. 4. The obtaining module 501 is configured to obtain at least one of a historical shopping information of the specific offline customer in the store or a preferred commodity of the specific offline customer.

Correspondingly, the recommendation module 404 in these embodiments is configured to recommend the commodity to the specific offline customer according to the historical shopping information of the online user, the collection of popular commodities, and at least one of the historical shopping information of the specific offline customer in the store or the preferred commodity of the specific offline customer.

For example, the recommendation module 404 is configured to recommend commodities to the specific offline customer in the following manner: determine a plurality of first commodities to be recommended according to the historical shopping information of the online user; determine a plurality of second commodities to be recommended according to at least one of the historical shopping information of the specific offline customer in the store or the preferred commodity of the specific offline customer; construct a collection of commodities to be recommended according to the plurality of first commodities to be recommended and the plurality of second commodities to be recommended, wherein the collection of commodities to be recommended comprises a plurality of commodities to be recommended comprising at least one of the plurality of first commodities to be recommended and at least one of the plurality of second commodities to be recommended; determine a recommendation degree of each of the plurality of commodities to be recommended, according to a commodity attention degree and a recommendation weight of the each of the plurality of commodities to be recommended, wherein the recommendation weight of a commodity to be recommended of the plurality of commodities to be recommended which belongs to the collection of popular commodities is greater than the recommendation weight of a commodity to be recommended of the plurality of commodities to be recommended which not belongs to the collection of popular commodities; and recommend the plurality of commodities to be recommended to the specific offline customer according to a descending sequence of the recommendation degree.

In some embodiments, the preferred commodity of the specific offline customer is determined by: generating a heat map of the specific offline customer according to stay positions of the specific offline customer in the store before; calculating a stay time of the specific offline customer at each of placement positions corresponding to different commodities according to the heat map of the specific offline customer and the placement positions corresponding to different commodities; and determining a commodity corresponding to a placement position with the stay time longer than a preset time as the preferred commodity of the specific offline customer. For example, different offline customers may be distinguished by different identifiers.

In some embodiments, the recommendation module 404 is configured to generate a name of the specific offline customer and names of the plurality of commodities to be recommended into a sentence conforming to grammatical rules by natural language generation technology; and
convert the sentence into a speech and sending the speech to a shopping guide of the store, so that the shopping guide recommends the plurality of commodities to be recommended to the specific offline customer according to the speech. In other embodiments, the recommendation module 404 is configured to obtain an image corresponding to each of the plurality of commodities to be recommended; generate a description information of each of the plurality of commodities to be recommended according to the image corresponding to the each of the plurality of commodities to be recommended; and outputting the image and the description information of each of the plurality of commodities to be recommended to a display screen of the store for display according to a descending sequence of the recommendation degree.

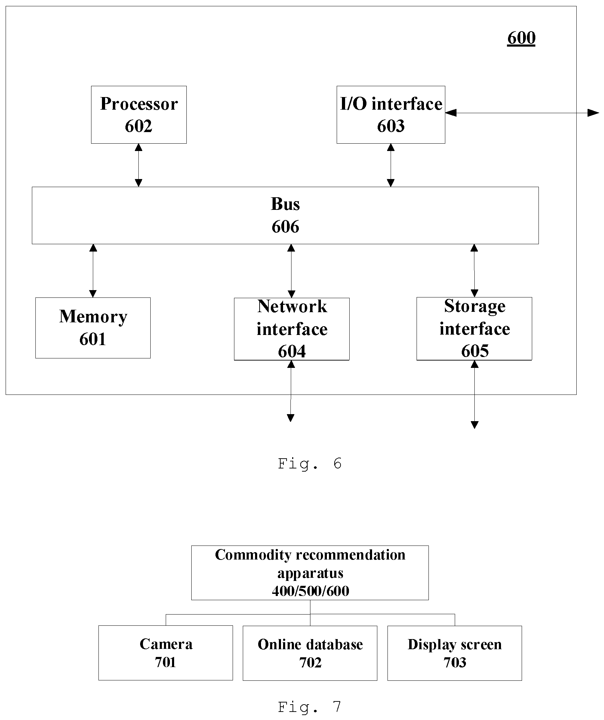

Fig. 6 is a schematic structure view of a commodity recommendation apparatus according to still other embodiments of the present disclosure. As shown in Fig. 6, the commodity recommendation apparatus 600 in these embodiments comprises a memory 601 and a processor 602 coupled to the memory 601. The processor 602 is configured to execute the commodity recommendation method according to any one of the above embodiments based on instructions stored in the memory 601.

The memory 601 may comprise, for example, a system memory, a fixed non-volatile storage medium, or the like. The system memory may, for example, store an operating system, an application program, a boot loader, and other programs.

The commodity recommendation apparatus 600 may also comprise an I/O interface 603, a network interface 604, a storage interface 605, or the like. For example, these interfaces 603, 604, and 605 may be connected to each other via a bus 606, and the memory 601 and the processor 602 may be connected to each other via a bus 606. The I/O interface 603 provides a connection interface for input and output apparatuses such as a display, a mouse, a keyboard, or a touch screen. The network interface 604 provides a connection interface for various networked apparatuses. The storage interface 605 provides a connection interface for external storage apparatuses such as SD cards or U disks.

Fig. 7 is a schematic structural view showing a commodity recommendation system according to some embodiments of the present disclosure. As shown in Fig. 7, the commodity recommendation system in these embodiments comprises the commodity recommendation apparatus 400/500/600 according to any one of the above embodiments and a camera 701.

The camera 701 is configured to collect images of offline customers currently entering the store and input the collected images to the commodity recommendation apparatus 400/500/600. The commodity recommendation apparatus 400/500/600 may process the images of offline customers in the manner provided above, and then recommend commodities to a specific offline customer.

In some embodiments, the commodity recommendation system may further comprise an online database 702. The online database 702 is configured to store attributes and historical shopping information of online users. In some embodiments, the commodity recommendation system may further comprise a display screen 703. The display screen 703 is configured to display commodity information recommended to the specific offline customer, such as an image and a description information of a commodity to be recommended.

The embodiments of the present disclosure also provide a computer-readable storage medium on which computer program instructions are stored, and the commodity recommendation method according to any one of the above embodiments is implemented when the instructions are executed by a processor.

Hereto, various embodiments of the present disclosure have been described in detail. Some details well known in the art are not described to avoid obscuring the concept of the present disclosure. According to the above description, those skilled in the art would fully know how to implement the technical solutions disclosed herein.

Those skilled in the art would understand that the embodiments of the present disclosure may be provided as a method, system, or computer program product. Therefore, embodiments of the present disclosure can take the form of an entirely hardware embodiment, an entirely software embodiment or an embodiment combining both hardware and software. Moreover, the present disclosure may take the form of a computer program product embodied on one or more computer-usable non-transitory storage media (including but not limited to disk storage, CD-ROM, optical memory, etc.) having computer-usable program code embodied therein.

The present disclosure is described with reference to flowcharts and/or block diagrams of methods, devices (systems) and computer program products according to embodiments of the present disclosure. It should be understood that each process in the flowcharts and/or the functions specified in one or more blocks of the block diagrams may be implemented by computer program instructions. The computer program instructions may be provided to a processor of a general purpose computer, a special purpose computer, an embedded processor, or other programmable data processing device to generate a machine, making the instructions executed by a processor of a computer or other programmable data processing device generate means implementing the functions specified in one or more flows of the flowcharts and/or one or more blocks of the block diagrams.

The computer program instructions may also be stored in a computer readable memory device capable of directing a computer or other programmable data processing device to operate in a specific manner such that the instructions stored in the computer readable memory device produce an article of manufacture including an instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

Although some specific embodiments of the present disclosure have been described in detail by way of examples, those skilled in the art should understand that the above examples are only for the purpose of illustration and are not intended to limit the scope of the present disclosure. It should be understood by those skilled in the art that modifications to the above embodiments and equivalently substitution of part of the technical features can be made without departing from the scope and spirit of the present disclosure. The scope of the disclosure is defined by the following claims.

## Claims

1. A commodity recommendation method, **characterized by** comprising:
analyzing an image of a specific offline customer currently entering a store to obtain an attribute of the specific offline customer;
determining an online user matching the specific offline customer according to the attribute of the specific offline customer;
constructing a collection of popular commodities of the store according to commodities corresponding to stay positions of offline customers who have entered the store before; and
recommending a commodity to the specific offline customer according to a historical shopping information of the online user and the collection of popular commodities.

2. The commodity recommendation method according to claim 1, **characterized in that** the recommending a commodity to the specific offline customer according to a historical shopping information of the online user and the collection of popular commodities comprises:
determining a plurality of commodities to be recommended according to the historical shopping information of the online user;
determining a recommendation degree of each of the plurality of commodities to be recommended, according to a commodity attention degree and a recommendation weight of the each of the plurality of commodities to be recommended, wherein the recommendation weight of a commodity to be recommended of the plurality of commodities to be recommended which belongs to the collection of popular commodities is greater than the recommendation weight of a commodity to be recommended of the plurality of commodities to be recommended which not belongs to the collection of popular commodities; and
recommending the plurality of commodities to be recommended to the specific offline customer according to a descending sequence of the recommendation degree.

3. The commodity recommendation method according to claims 1 or 2, **characterized in that** the constructing a collection of popular commodities comprises:
generating a heat map of the offline customers according to the stay positions of the offline customers; and
obtaining the collection of popular commodities according to the heat map of the offline customers and placement positions corresponding to the commodities.

4. The commodity recommendation method according to claim 1, **characterized by** further comprising:
obtaining at least one of a historical shopping information of the specific offline customer in the store or a preferred commodity of the specific offline customer,
wherein the recommending a commodity to the specific offline customer according to historical shopping information of the online user and the collection of popular commodities comprises:
recommending the commodity to the specific offline customer according to the historical shopping information of the online user, the collection of popular commodities, and at least one of the historical shopping information of the specific offline customer in the store or the preferred commodity of the specific offline customer.

5. The commodity recommendation method according to claim 4, **characterized in that** the recommending the commodity to the specific offline customer according to the historical shopping information of the online user, the collection of popular commodities, and at least one of the historical shopping information of the specific offline customer in the store or the preferred commodity of the specific offline customer comprises:
determining a plurality of first commodities to be recommended according to the historical shopping information of the online user;
determining a plurality of second commodities to be recommended according to at least one of the historical shopping information of the specific offline customer in the store or the preferred commodity of the specific offline customer;
constructing a collection of commodities to be recommended according to the plurality of first commodities to be recommended and the plurality of second commodities to be recommended, wherein the collection of commodities to be recommended comprises a plurality of commodities to be recommended comprising at least one of the plurality of first commodities to be recommended and at least one of the plurality of second commodities to be recommended;
determining a recommendation degree of each of the plurality of commodities to be recommended, according to a commodity attention degree and a recommendation weight of the each of the plurality of commodities to be recommended, wherein the recommendation weight of a commodity to be recommended of the plurality of commodities to be recommended which belongs to the collection of popular commodities is greater than the recommendation weight of a commodity to be recommended of the plurality of commodities to be recommended which not belongs to the collection of popular commodities; and
recommending the plurality of commodities to be recommended to the specific offline customer according to a descending sequence of the recommendation degree.

6. The commodity recommendation method according to claim 4, **characterized in that** the preferred commodity of the specific offline customer is determined by:
generating a heat map of the specific offline customer according to stay positions of the specific offline customer in the store before;
calculating a stay time of the specific offline customer at each of placement positions corresponding to different commodities according to the heat map of the specific offline customer and the placement positions corresponding to different commodities; and
determining a commodity corresponding to a placement position with the stay time longer than a preset time as the preferred commodity of the specific offline customer.

7. The commodity recommendation method according to claims 2 or 5, **characterized in that** the recommending the plurality of commodities to be recommended to the specific offline customer comprises:
generating a name of the specific offline customer and names of the plurality of commodities to be recommended into a sentence conforming to grammatical rules by natural language generation technology; and
converting the sentence into a speech and sending the speech to a shopping guide of the store, so that the shopping guide recommends the plurality of commodities to be recommended to the specific offline customer according to the speech.

8. The commodity recommendation method according to claims 2 or 5, **characterized in that** the recommending the plurality of commodities to be recommended to the specific offline customer comprises:
obtaining an image corresponding to each of the plurality of commodities to be recommended;
generating a description information of each of the plurality of commodities to be recommended according to the image corresponding to the each of the plurality of commodities to be recommended; and
outputting the image and the description information of each of the plurality of commodities to be recommended to a display screen of the store for display according to a descending sequence of the recommendation degree.

9. The commodity recommendation method according to claim 2, **characterized in that** the commodity attention degree of each of the plurality of commodities to be recommended is determined according to at least one of a visiting number, a feedback information of online users, a matching degree with habits of the specific offline customer or a cost performance of the each of the plurality of commodities to be recommended,
wherein the higher the visiting number, the better the feedback information of online users, the higher the matching degree with habits of the specific offline customer, or the higher the cost performance, the higher the commodity attention degree of the each of the plurality of commodities to be recommended is.

10. A commodity recommendation apparatus, **characterized by** comprising:
an analysis module configured to analyze an image of a specific offline customer currently entering a store to obtain an attribute of the specific offline customer;
a match module configured to determine an online user matching the specific offline customer according to the attribute of the specific offline customer;
a construction module configured to construct a collection of popular commodities of the store according to commodities corresponding to stay positions of offline customers who have entered the store before; and
a recommendation module configured to recommend a commodity to the specific offline customer according to a historical shopping information of the online user and the collection of popular commodities.

11. The commodity recommendation apparatus according to claim 10, **characterized in that** the recommendation module is configured to:
determine a plurality of commodities to be recommended according to the historical shopping information of the online user;
determine a recommendation degree of each of the plurality of commodities to be recommended, according to a commodity attention degree and a recommendation weight of the each of the plurality of commodities to be recommended, wherein the recommendation weight of a commodity to be recommended of the plurality of commodities to be recommended which belongs to the collection of popular commodities is greater than the recommendation weight of a commodity to be recommended of the plurality of commodities to be recommended which not belongs to the collection of popular commodities; and
recommend the plurality of commodities to be recommended to the specific offline customer according to a descending sequence of the recommendation degree.

12. The commodity recommendation apparatus according to claims 10 or 11, **characterized in that** the construction module is configured to:
generate a heat map of the offline customers according to the stay positions of the offline customers; and
obtain the collection of popular commodities according to the heat map of the offline customers and placement positions corresponding to the commodities.

13. The commodity recommendation apparatus according to claim 10, **characterized by** further comprising:
an obtaining module configured to obtain at least one of a historical shopping information of the specific offline customer in the store or a preferred commodity of the specific offline customer,
wherein the recommendation module is configured to recommend the commodity to the specific offline customer according to the historical shopping information of the online user, the collection of popular commodities, and at least one of the historical shopping information of the specific offline customer in the store or the preferred commodity of the specific offline customer.

14. The commodity recommendation apparatus according to claim 13, **characterized in that** the recommendation module is configured to:
determine a plurality of first commodities to be recommended according to the historical shopping information of the online user;
determine a plurality of second commodities to be recommended according to at least one of the historical shopping information of the specific offline customer in the store or the preferred commodity of the specific offline customer;
construct a collection of commodities to be recommended according to the plurality of first commodities to be recommended and the plurality of second commodities to be recommended, wherein the collection of commodities to be recommended comprises a plurality of commodities to be recommended comprising at least one of the plurality of first commodities to be recommended and at least one of the plurality of second commodities to be recommended;
determine a recommendation degree of each of the plurality of commodities to be recommended, according to a commodity attention degree and a recommendation weight of the each of the plurality of commodities to be recommended, wherein the recommendation weight of a commodity to be recommended of the plurality of commodities to be recommended which belongs to the collection of popular commodities is greater than the recommendation weight of a commodity to be recommended of the plurality of commodities to be recommended which not belongs to the collection of popular commodities; and
recommend the plurality of commodities to be recommended to the specific offline customer according to a descending sequence of the recommendation degree.

15. The commodity recommendation apparatus according to claim 13, **characterized in that** the preferred commodity of the specific offline customer is determined by:
generating a heat map of the specific offline customer according to stay positions of the specific offline customer in the store before;
calculating a stay time of the specific offline customer at each of placement positions corresponding to different commodities according to the heat map of the specific offline customer and the placement positions corresponding to different commodities; and
determining a commodity corresponding to a placement position with the stay time longer than a preset time as the preferred commodity of the specific offline customer.

16. The commodity recommendation apparatus according to claims 11 or 14, **characterized in that** the recommendation module is configured to:
generate a name of the specific offline customer and names of the plurality of commodities to be recommended into a sentence conforming to grammatical rules by natural language generation technology; and
convert the sentence into a speech and sending the speech to a shopping guide of the store, so that the shopping guide recommends the plurality of commodities to be recommended to the specific offline customer according to the speech.

17. The commodity recommendation apparatus according to claims 11 or 14, **characterized in that** the recommendation module is configured to:
obtain an image corresponding to each of the plurality of commodities to be recommended;
generate a description information of each of the plurality of commodities to be recommended according to the image corresponding to the each of the plurality of commodities to be recommended; and
outputting the image and the description information of each of the plurality of commodities to be recommended to a display screen of the store for display according to a descending sequence of the recommendation degree.

18. The commodity recommendation apparatus according to claim 11, **characterized in that** the commodity attention degree of each of the plurality of commodities to be recommended is determined according to at least one of a visiting number, a feedback information of online users, a matching degree with habits of the specific offline customer or a cost performance of the each of the plurality of commodities to be recommended,
wherein the higher the visiting number, the better the feedback information of online users, the higher the matching degree with habits of the specific offline customer, or the higher the cost performance, the higher the commodity attention degree of the each of the plurality of commodities to be recommended is.

19. A commodity recommendation apparatus, **characterized by** comprising:
a memory; and
a processor coupled to the memory and configured to execute the commodity recommendation method according to any one of claims 1 to 9 based on instructions stored in the memory.

20. A computer-readable storage medium having computer program instructions stored thereon, **characterized in that** the commodity recommendation method according to any one of claims 1 to 9 is implemented when the instructions are executed by a processor.

21. A commodity recommendation system, **characterized by** comprising: the commodity recommendation apparatus according to any one of claims 10 to 19; and a camera configured to collect images of offline customers currently entering the store and input the collected images to the commodity recommendation apparatus.
